# EUROPEAN PATENT SPECIFICATION

(11) **EP 0 674 169 B1**
(45) Date of publication and mention of the grant of the patent: **25.09.2002**
(21) Application number: 95301781.1
(22) Date of filing: 17.03.1995
(51) Int. Cl.: G01N 23/225

(54) **Passband-adjustable photo-detector for inverse photoemission spectroscopy**
Photodetektor mit einstellbarem Durchlassbereich zur inversen Photoemissionspektroskopie
Photo-detecteur à passe-bande ajustable pour la spectroscopie de photo-emission inverse

(30) Priority: 24.03.1994 JP 5382194
(43) Date of publication of application: 27.09.1995
(73) Proprietor: HIROSHIMA UNIVERSITY, Hiroshima City Hiroshima Pref. (JP)
(72) Inventor: Namatame, Hirofumi, Higashihiroshima City, Hiroshima Pref (JP); Taniguchi, Masaki, Hiroshima City, Hiroshima Pref (JP)
(74) Representative: Nicholls, Michael John

(56) References cited:
- EP-A- 0 475 305
- EP-A- 0 562 874

## Description

The present invention relates to a passband-adjustable photo-detector for inverse photoemission spectroscopy, which belongs to technical fields of electron technology and photon technology and is used for a high resolution inverse photoemission spectroscope.

A bandpass filter type photo-detector for inverse photoemission spectroscopy is formed of a simple combination of low-cut and high-cut filters. In a recently developed photo-detector having the most excellent property, as the low-cut filter, there is adopted a photoelectron multiplier which is provided with Cu-BeO deposited with KCℓ thin film on a surface thereof for the first dynode, while as the high-cut filter, there is adopted SrF₂ monocrystal window, in which a sensitivity property of central energy 9.40 eV and half value width 0.47 eV as shown in Fig. 1 is employed. Such a bandpass photo-detector is disclosed in EP-A-0,562,874.

This bandpass filter type photo-detector is featured in that the structure is simple and the operational stability is high. However, the obtainable resolution thereof is no more than 0.47 eV at most.

The photoemission spectroscopy and the inverse photoemission spectroscopy are means for directly observing occupied and unoccupied electronic states of energy in material, respectively, and they have a complementary relation with each other. The presently standardized resolution of the photoemission spectroscopy is in order of 0.3 eV. The investigation of occupied and unoccupied electronic states of energy with the precision of the same order under the employment of the photoemission and the inverse photoemission spectroscopies respectively is extremely desirable for the research of material. It is necessary for the realization thereof to narrow the bandwidth of the bandpass filter type photo-detector into the order of 0.3 eV.

In general, when the higher resolution is sought, the detection sensitivity is lowered in accompaniment therewith. The matter is the same as to the bandpass filter type photo-detector. In the case that the surface of the material to be measured is unstable in a vacuum, an experiment in which signals should be accumulated for a long time is unpracticable. In this case, it is required to raise the detection sensitivity at the sacrifice of the resolution. However, it is impossible to vary the passband of the conventional bandpass filter type photodetector during the experiment. Accordingly, for practising the high resolution it is necessary to provide a measuring apparatus comprising two kinds of detectors, that is, a high resolution detector, even if the detection sensitivity is somewhat low, and a high sensitivity detector.

Photoemission spectroscopy and inverse photoemission spectroscopy provide information relating to occupied and unoccupied electronic states respectively, so that the whole aspect of electronic states of the material cannot be clarified until both of these are combined. The resolution of the conventional photoemission spectroscopy is of the order of about 0.3 eV, while the resolution of the conventional inverse photoemission spectroscopy is of the order of about 0.5 eV. Accordingly, for comparing and investigating respective data of both of these spectroscopies it is necessary to afford comparable resolutions thereto. The inverse photoemission spectroscopy is a method for clarifying the unoccupied electronic state of the material by taking notice of a certain single energy component of light emitted from the surface of the sample to which is applied a monochromatised electron beam and by observing the intensity of the emitted light as a function of the energy of the electron beam. The energy width of the electron beam is defined by the expanse of thermo-electron in the electron source and hence about 0.25 eV. On the other hand, the width of pass band of the bandpass filter type photodetector is about 0.47 eV at the least conventionally and has been improved into 0.35 eV by recent technical development. However, for obtaining resolution comparable with that of the photoemission spectroscopy it is necessary to narrow the passband of the photodetector into the order of the electron beam width of 0.25 eV.

In general, when the resolution is raised, the detection sensitivity is lowered. It is the same in the bandpass filter type photodetector for inverse photoemission spectroscopy, so that, when the half value width of the detector is narrowed, the detection sensitivity is lowered and hence longer time is required for the measurement. On the other hand, when the half value width is widened, the sensitivity is raised and hence the measurement is carried out in short time. In general, whether the resolution or the sensitivity is preferential, is decided by the limitation of the time required for the measurement and whether the material to be measured is stable or not in super high vacuum wherein the inverse photoemission spectroscopy is effected.

EP-A-0,475,305 discloses a photo-detector for inverse photoemission spectroscopy, comprising a Cu-BeO photo-electron multiplier and, arranged in front of the photo-electron multiplier, an adjustable high-cut optical filter of which the high-cut optical filter characteristic is adjustable by controlling its temperature. A temperature controller is provided to adjust the temperature of the high-cut optical filter. In use, the photo-detector is used to perform two sets of measurements with the high-cut filter adjusted to have different cut-off frequencies and the difference between the outputs with the two different high cut-off energies is taken as the effective output of the photo-detector. In this way, the photo-detector achieves an effective bandpass characteristic in which the high and low cut-off characteristics are created by the two different high cut-off characteristics for the two initial sets of measurements.

According to the present invention, there is provided a passband-adjustable photo-detector for inverse photoemission spectroscopy, in which an electron beam from an electron gun is applied onto a sample and light reflected therefrom is converged into a photo-electron multiplier, so as to effect photo-detection, said photo-detector comprising: a photo-electron multiplier having a low-cut optical filter characteristic; a LiF monocrystal window having a KCI film applied thereon arranged in front of the photo-electron multiplier; an adjustable high-cut optical ilter arranged in front of the photo-electron multiplier and of which the high-cut optical filter characteristic is adjustable by controlling the temperature thereof; and control means for controlling the temperature of the high-cut optical filter to adjust the passband.

Preferably, the high-cut optical filter is a CaF₂ monocrystal window.

Preferably, the temperature is controllable from about liquid nitrogen temperature to a temperature of the order of 150°C.

Desirably, the adjustable high-cut optical filter is a metal fluoride monocrystal window.

Advantageously, the photoelectric multiplier has a KCI thin film deposited thereon as the means to provide the low-cut characteristic.

Advantageously, the high-cut optical filter has a KCI film deposited thereon.

The output of the photo-electron multiplier may be connected with a pulse counter circuit through an amplifier, so as to measure any one of: light absorption property, the window transmissibility and the sensitivity as a bandpass filter for inverse photoemission spectroscopy.

The photo-detector of the present invention allows the resolution of the inverse photoemission spectroscopy to be continuously varied from a higher value than the conventional one (that is of the same order as ususal photoemission spectroscopy or higher than it) to a lower value, so as to necessarily exhibit a large power in the practical high resolution experiment.

According to the present invention, it can be realised to select whether the aforesaid resolution or the sensitivity is preferential by electrically controlling the half value width of the bandpass filter without any change of the experimental apparatus during the experiment. Thus it can be readily realised to remarkably save the time required for the experiment and further to respond to the measurement of material which is not suitable for a long measurement by raising the sensitivity at the partial sacrifice of the resolution, so as to exceedingly contribute to the research of material property.

The invention will be further described by way of non-limitative example with reference to the accompanying drawings in which:

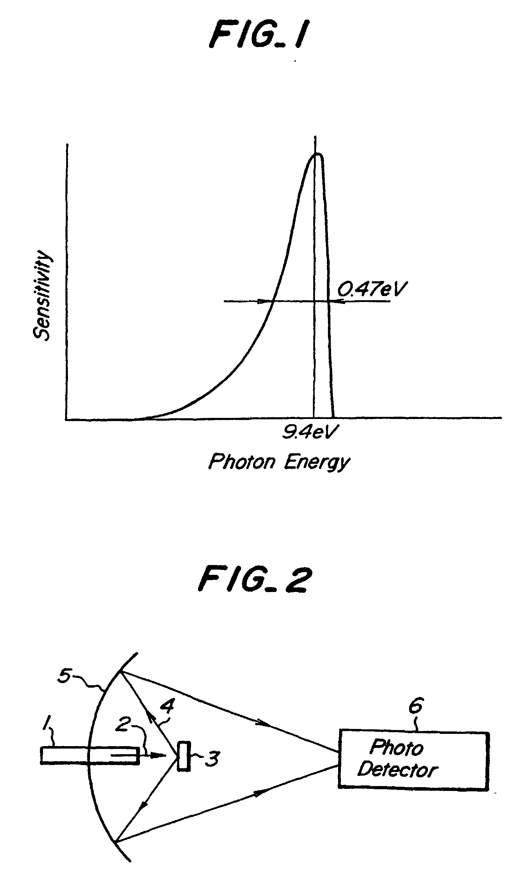

Fig. 1 is a diagram showing a property of a conventional bandpass filter type photo-detector for inverse photoemission spectroscopy, as mentioned above;
Fig. 2 is an outline diagram showing the principle of a passband-adjustable photo-detector for inverse photoemission spectroscopy according to the present invention;
Fig. 3 is a diagram showing a principal arrangement of an embodiment of the photo-detector according to the present invention;
Fig. 4 is a diagram showing the energy dependency of transmissibility of the window in the photo-detector according to the present invention;
Fig. 5 is a diagram showing a light absorption property of a KCℓ thin film in the photo-detector according to the present invention;
Fig. 6 is a diagram showing a sensitivity property of a photo-electron multiplier deposited with a KCℓ thin film in the photo-detector according to the present invention;
Fig. 7 is a diagram showing a property of the bandpass filter in the bandwidth adjustable photo-detector according to the present invention;
Fig. 8 is a diagram showing a principal concrete arrangement of the photo-detector according to the present invention;
Fig. 9A and 9B are diagrams showing temperature dependency of absorption factor and transmission coefficient of photon energy at 74K, 273K and 275K respectively;
Fig. 10 is a diagram showing photoemission absorption property of KCℓ deposited thin film at 1000 Å, 1500 Å and 500 Å in the photo-detector according to the present invention;
Fig. 11 is a diagram showing a bandpass filter characteristic presenting asymmetric peak structure of the combination of a CaF₂ monocrystal window and a KCℓ deposited first dynode of the photo-electron multiplier in the photo-detector according to the present invention;
Fig. 12 is a diagram showing transmission property of a LiF monocrystal window deposited with KCℓ thin film in the photo-detector according to the present invention;
Fig. 13 is a diagram showing transmission property of a LiF monocrystal window used for a substrate of a KCℓ deposited thin film in the photo-detector according to the present invention; and
Fig. 14 is a diagram showing temperature dependency of a bandpass filter in the photo-detector according to the present invention.

Throughout different views of the drawings; 1 is an electron gun, 2 is an electron beam, 3 is a sample, 4 is reflected light, 5 is a converging mirror, 6 is a photo-detector, 7 is a LiF monocrystal window deposited with KCℓ thin film, 8 is liquid nitrogen, 9 is a crystal, 10 is a thermo-couple, 11 is a heater, 12 is a CaF₂ monocrystal window deposited with KCℓ thin film, 13 is a KCℓ thin film, 14 is light, 15 is a photo-electron multiplier, and 16 is a first dynode.

The present invention is actually explained in detail with respect to the attached drawings.

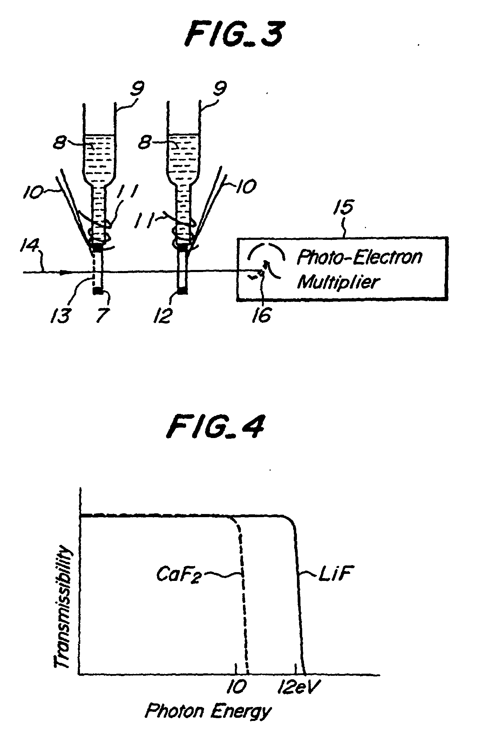

Fig. 2 shows an outline principle of an inverse photoemission spectroscope, in which 1 is an electron gun, 2 is an electron beam emitted therefrom, and 3 is a sample. The electron beam 2 emitted from the electron gun is applied on the sample 3. Light 4 emitted from the sample 3 is converged by a converging mirror 5, so as to irradiate a photo-detector 6.

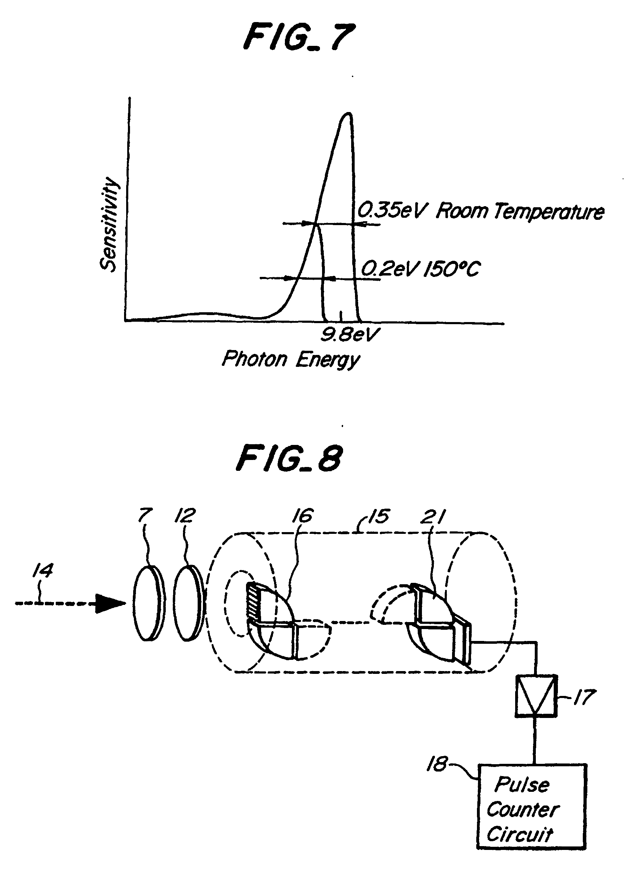

Fig. 3 shows an outline principle of a passband width-adjustable photo-detector for inverse photoemission spectroscopy according to the present invention. In Fig. 3, a principal structure of an inverse photoemission spectroscope comprised in the photo-detector as shown in Fig. 2 is illustrated. In Fig. 3, 7 is a LiF monocrystal window, on a surface of which a KCℓ thin film 13 is deposited with 100 Å thickness. The LiF monocrystal window 7 is refrigerated at the vicinity of liquid nitrogen temperature individually through cryostats 9, which accommodate liquid nitrogen 8 and additionally comprise thermocouples 10 and heaters 11, so as to provide temperature adjusting arrangement.

A CaF₂ monocrystal window 12 is supported with cryosats 9 accommodating liquid nitrogen 8 like the LiF monocrystal window 7 and attached to a temperature regulator comprising a thermo-couple 10 and a heater 11.

Incident light 14 shown in Fig. 3 (which is the same as the incident light 4 projected into the photo-detector 6 as shown in Fig.2) is applied on a first dynode 16, on a surface of which a KCℓ thin film is deposited at 1000 Å thickness, of a photo-electron multiplier 15 of solar blind type (e.g. HTV:R-595), through the LiF monocrystal window 7 and the CaF₂ monocrystal window 12 refrigerated at the vicinity of liquid nitrogen temperature.

The incident light 14 passing into the photo-detector 6 passes through two windows of a KCℓ thin film coated LiF monocrystal window 7 and a KCℓ thin film coated CaF₂ monocrystal window 12.

A cutoff energy of the LiF monocrystal window 7 is 12 eV at room temperature, while a cutoff energy of the CaF₂ monocrystal window 12 is 10 eV at room temperature. Consequently, as is apparent from the energy dependency of the transmission factor of these windows as shown in Fig. 4, the light having energy more than about 10 eV cannot pass through these windows.

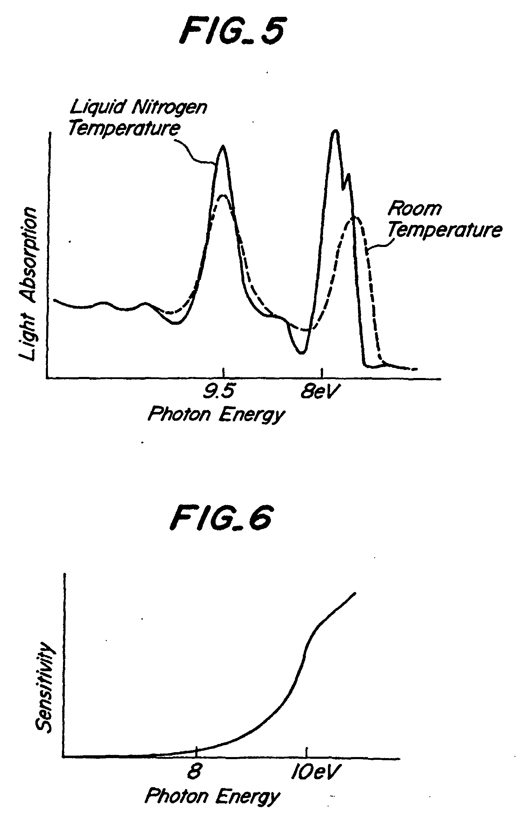

As shown in Fig. 5, the KCℓ thin film has a light absorption property which presents large and sharp peaks approximately at 9.5 eV and 8.0 eV. This light absorption property is emphasized by refrigeration, and hence these peaks become more large and sharp. According to this effect, the same result as obtained by 150 Å thickness at room temperature can be obtained by about 100 Å thickness under the refrigeration. In addition, the light absorption of KCℓ thin film at the vicinity of 9.8 eV is somewhat reduced at very low temperature from that at room temperature, so that such a condition as light transmission is ready at the vicinity of 9.8 eV just before the cutoff energy of CaF₂ monocrystal window, while said condition at the vicinity of 9.5 eV is difficult can be obtained.

The incident light successively passing through LiF monocrystal window 7 and CaF₂ monocrystal window 12 is applied on the photo-electron multiplier 15 comprising the first dynode 16 of the photo-detector 6. The incident light is applied to the KCℓ thin film and a photo-electron emitted from the surface of said thin film, is amplified by the photo-electron multiplier 15. As shown in Fig. 6, the photoemission of KCℓ thin film of 1000 Å thick appears about at 8 eV and is suddenly increased at the vicinity of 9 eV. The combination of LiF monocrystal window 7 and CaF₂ monocrystal window 12 provides a high cut filter having a bandpass structure at the vicinity of the cutoff energy of CaF₂ monocrystal window of about 10 eV, while the combination of the photo-electron multiplier 15 and the first dynode 16 provides a low cut filter on the basis of high sensitivity in an energy range exceeding the vicinity of 9 eV.

Consequently, the combination of the photo-electron multiplier 15, the first dynode 16, the LiF monocrystal window 7 and the CaF₂ monocrystal window 12 provides a bandpass property having a peak at 9.8 eV. The temperature of the CaF₂ monocrystal window can be varied from low temperature, that is, liquid nitrogen temperature to high temperature, that is, about 150°C, and further can be maintained at arbitrary temperature. The cutoff energy of CaF₂ monocrystal window 12 is about 10 eV at room temperature, and is shifted toward high energy side as the temperature is lowered, while toward low energy side as the temperature is raised. For instance, when the temperature is raised to 150°C, the cutoff energy is transferred to a low energy side of about 0.3 eV. The property on higher energy side of the bandpass filter type photoemission detector is defined by the cutoff property of CaF₂ monocrystal window 12, so that the bandwidth is varied by the temperature variation of the window 12. As shown in Fig. 7, the bandwidth of 0.35 eV at room temperature is narrowered into about 0.2 eV at 150°C. Thus an arbitrary bandwidth can be set in this temperature range.

An actual example of the passband adjustable photo-detector for inverse photoemission spectroscopy according to the present invention will be described hereinafter.

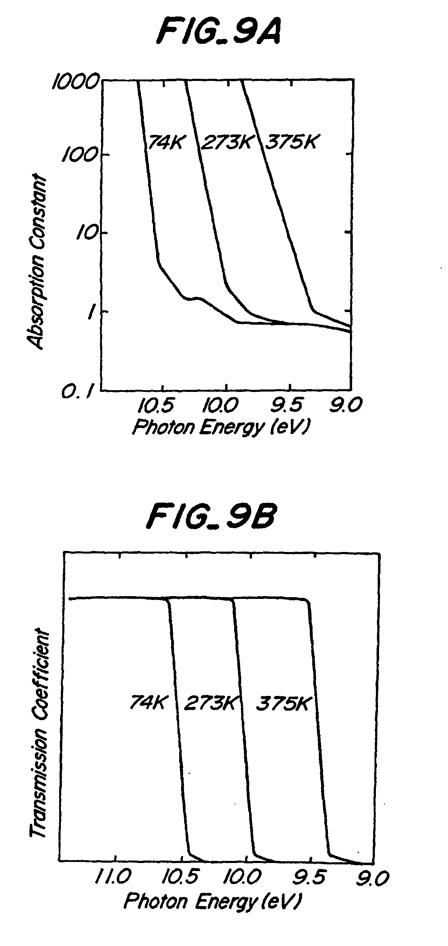

The construction of photo-detector is shown in Fig. 8. Fig. 8 shows an example of actual arrangement of the photo-detector 6 as shown in Fig. 2, in which 14 is the incident light, 7 is a LiF monocrystal window deposited with KCℓ thin film in 100 Å thick, 12 is a CaF₂ monocrystal window, 15 is a photo-electron multiplier, 16 is a first dynode deposited with a KCℓ thin film in 1000 Å thick, 17 is an amplifier connected with an output of the multiplier 15 and 18 is a pulse counter circuit.

The photoemission property of CaF₂ monocrystal window presents a lowpass filter property. That is, the absorption coefficient is abruptly increased at the vicinity of 10 eV wherein the exciton absorption appears, and, in a region exceeding such a cutoff energy, the light transparency is lost, while, in a region below this cutoff energy, the CaF₂ monocrystal window presents almost flat light transparency.

The cutoff energy is caused at the energy level wherein the exciton absorption appears, so that this energy level is varied by the crystal temperature. In practice, this energy level wherein the exciton absorption appears is varied as shown in Figs. 9A and 9B, by the crystal temperature variation from liquid nitrogen temperature (75K) to 375K.

However, even in this case that the crystal temperature is varied, the transparency property in the energy region below the absorption limit is flat, so as to surely realize the variable cutoff lowpass filter.

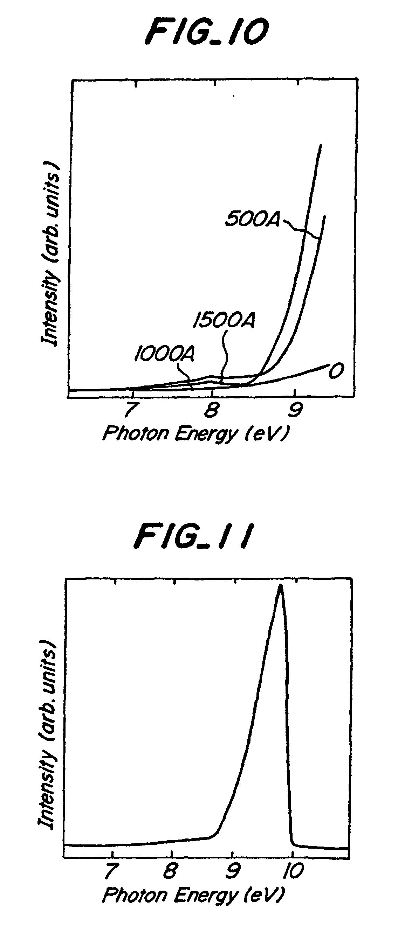

Next, the photo-detection property of the photo-electron multiplier 15 comprising the first dynode 16 deposited a KCℓ thin film with 1000 A thick will be explained. The first dynode 16 consists of CuBe-O and the photo-electron absorption property thereof presents finite values in the vicinity of energy level of about 6 eV and, as a result, presents abrupt increase with the increase of photo-energy. This photo-electron absorption property is varied by depositing a KCℓ thin film on the surface of the first dynode 16, while the property further abruptly increase together with the increase of photo-energy as shown in Fig. 10. This is because of the reflection of the photoelectron absorption property of KCℓ thin film, which consists of an ion crystal being a proper insulator. Thus, it results that the KCℓ thin film is electrically charged by deriving photo-electrons therefrom. The photo-electron absorption is reduced by depositing too thick KCℓ thin film, and is reduced also by depositing too thin KCℓ thin film because of reduced contribution thereof, so that it is required to select the most suitable thickness thereof.

When the photo-electron absorption is measured as the increase of thickness of KCℓ thin film, it appears that this absorption is almost simply increased until the vicinity of 1000 Å thickness as shown in Fig. 10, and represents the tendency of saturation with further increase of thickness. According to further detailed observation of film thickness dependency of the photo-electron absorption, it appears that the absorption at the vicinity of 8 eV is reduced at the vicinity of 1000 Å thickness. So that, it is possible to realize such a property that the photo-electron absorption is reduced at the vicinity of 8 eV and is suddenly increased over 9 eV by depositing KCℓ thin film of 1000 Å thickness.

The photo-electrons 19 emitted from the first dynode 16 are amplified by about 106 through plural electrodes 20 for secondary electron multiplication and are collected by a collector 21. The intensity of collected electrons is observed by a pulse counter circuit 18 after the amplification through an amplifier 17 as a preamplifier. This property of photo-electron multiplier 15 represents the highpass filter property as to the photo-energy, so that the cutoff energy thereof is defined by the rise-up of the photo-electron absorption of KCℓ thin film so as to be at the vicinity of about 9 eV.

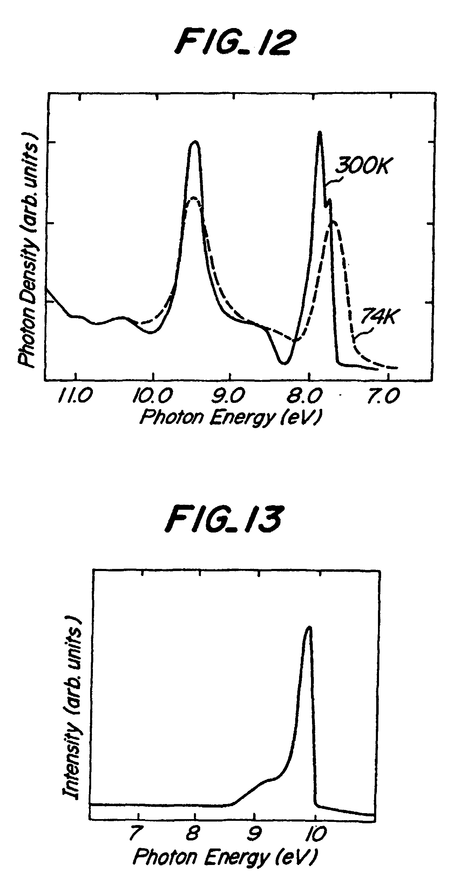

According to the combination of CaF₂ monocrystal window 12 and the first dynode 16 of the photo-electron multiplier 15 on which KCℓ thin film is deposited, that is, the combination of lowpass and highpass filters, it is possible to realize the bandpass filter, the difference of respective cutoff energies of which filters corresponds to the passband width. However, the practical characteristics does not represent an ideal step function as the filter property but only gradual variations in the vicinities of respective cutoff energies, so that the obtainable bandpass characteristic represents an asymmetric peak structure on the basis of reflections of respective rise-up properties, as shown in Fig. 11.

The cutoff characteristic of the lowpass filter, which depends on the absorption of exciton, is sharp as to the good CaF₂ monocrystal window, while the cutoff characteristic of the highpass filter, which is formed of photo-electron absorption property reflecting the interband transition of KCℓ thin film, is comparatively gradual. So that, it is required for narrowing the half value width of the bandpass filter to improve the characteristics of the aforesaid highpass filter. Accordingly, the LiF monocrystal window 7 deposited with KCℓ thin film has entered on the stage.

The transmission property of KCℓ thin film represents sharp exciton absorption at the vicinity of 9.5 eV, the energy level of which is somewhat lower than the cutoff of low pass filter and corresponds to the cutoff of highpass filter as shown in Fig. 12.

An improved highpass filter can be realized by combining the KCℓ thin film with the first dynode 16 of the aforesaid photo-electron multiplier 15. On the other hand, LiF monocrystal window 7 is transparent below the vicinity of 11 eV and hence can be used as the substrate for depositing KCℓ thin film. Accordingly, a bandpass filter property having central energy 9.9 eV and half value width 0.37 eV as shown in Fig. 13 can be realized by combining these three elements.

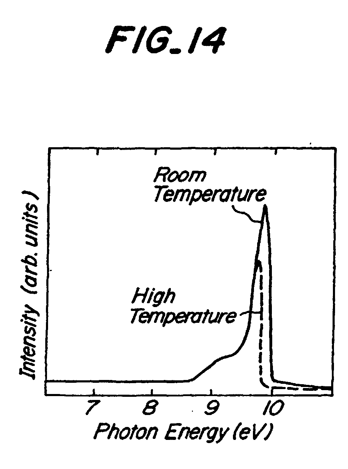

CaF₂ monocrystal window 12 represents almost ideal lowpass filter property, the cutoff of which is defined by the crystal temperature. When CaF₂ monocrystal window 12 is refrigerated toward low temperature of 74 K, the cutoff energy is shifted toward high energy side, while, when it is heated at high temperature, the cutoff energy is shifted toward low energy side, as is apparent from Figs. 9A and 9B. Accordingly, the property of bandpass filter represents the variation of property, which corresponds to the variation of the high energy cutoff. When CaF₂ monocrystal window 12 is heated at high temperature of about 375 K, the bandwidth is increased, while, when it is refrigerated at low temperature of 47 K, the bandwidth is reduced, as shown in Fig. 14. In addition to the variation of bandwidth, the variation of central energy level is also caused. However, the usage for measuring inverse photoemission spectroscopy can be made possible by the calibration as a function of temperature.

The deterioration of measurement sensitivity is unavoidably caused by the measurement with high resolution, so that much more time than that with usual resolution is required. In the practical measurement, although the measurement with high resolution is preferable, it is required to raise the sensitivity at a certain sacrifice of the resolution in relation to measurement time duration, and hence the bandwidth adjustable photo-detector 6 according to the present invention becomes useful. This photo-detector 6 is made applicable by the previous calibration. This means that a novel property can be obtained by additionally providing a temperature adjustable structure such as a thermo-couple 10 and a heater 11 as shown in Fig. 3 in the same structure as the photo-detector 6 afforded with high resolution by utilizing a window deposited with KCℓ thin film.

The same property can be theoretically obtained by directly depositing KCℓ thin film on the monocrystal window 12 also. However, under the condition such as the temperature adjustable structure is additionally provided so as to be heated, the possibility in that the reaction between KCℓ thin film and CaF₂ monocrystal window causes trouble is high. So that it is preferable to dare to provide LiF monocrystal window 7 for the substrate of KCℓ thin film.

According to the present invention, the bandwidth of the bandpass filter used for the photo-detector can be continuously varied from conventional bandwidth 0.35 eV to narrow bandwidth 0.2 eV only by a simple method of heating the crystal of window in the bandpass filter. On the contrary, the bandwidth can be widened by the refrigeration, so that particularly widened bandwidth of about 0.9 eV can be attained at liquid nitrogen temperature. The wider the bandwidth is, the higher the detection sensitivity is, while the sensitivity is reduced with the narrow bandwidth. The case that all materials should be measured with high resolution and long time expense is rare, while particular materials, for instance organic materials and materials having unstable surfaces should be measured in time duration being as short as possible. Furthermore, there is a certain case that the whole of the same sample is measured with low resolution and only a part thereof should be measured with high resolution. However, the photo-detector according to the present invention is efficient, because the resolution of the detector can be optionally set, although setting range is restricted. The present invention has an industrial merit such that the measurement which conventionally necessitates plural apparatus in the prior art can be effected only by one apparatus according to the present invention.

In the bandpass filter type photo-detector for inverse photoemission spectroscopy of the present invention, CaF₂ monocrystal window is used for high cut filter, while for low cut filter there is used the photo-electron multiplier having a sufficient sensitivity in an energy region exceeding that of vacuum ultra-violet ray. In addition to this fundamental arrangement, for improving the performance thereof, the low energy side performance of the bandpass filter is improved by depositing KCℓ thin film on LiF monocrystal window 7 and CaF₂ monocrystal window 12 in the light transmission region, so as to utilize the absorption property inherent to KCℓ thin film. Furthermore, a sensitivity raising material, that is, usually KCℓ thin film is deposited on the photoemissive surface of the photo-electron multiplier. The present invention is featured in that, in view of the temperature dependency of light absorption property of CaF₂ monocrystal window and KCℓ thin film, the optionally setting of passband width can be realized together with the improvement of bandpass width and sensitivity.

As to the light absorption property of KCℓ thin film, as shown in Fig. 5, the absorption in the vicinity of 9.5 eV at low temperature is sharply increased and the absorption in the vicinity of 9.8 eV in bandpass region is reduced, so as to facilitate the light transmission. According to the increase of absorption at low temperature, the same absorption can be obtained through more thin film. For instance, it is possible to reduce from the film thickness of necessitating 150 Å at room temperature (in the prior art) into the order of 100 Å according to the present invention, and hence to facilitate the light transmission within the bandpass region.

The temperature dependency of cutoff energy of CaF₂ monocrystal window is shifted toward low energy side at high temperature, while shifted toward high energy side at low temperature. The sharpness of absorption and the variation of transmissibility in transmissible region are negligibly small. As it is apparent from Fig. 7, the bandwidth can be optionally set by the temperature control of CaF₂ monocrystal window, so as to facilitate the aimed measurement.

This bandwidth adjustable structure can be applied also on the bandpass filter type photo-detector employing other than CaF₂ monocrystal window, that is, anyone selected among SrF₂, MgF₂ and LiF monocrystal windows as high cut filter.

Itis possible to practice the invention by replacing the substances mentioned above with others having the same optical characteristic.

## Claims

1. A passband-adjustable photo-detector (6) for inverse photoemission spectroscopy, in which an electron beam (2) from an electron gun (1) is applied onto a sample (3) and light (4, 14) reflected therefrom is converged into a photo-electron multiplier (15), so as to effect photo-detection, said photo-detector (6) comprising:
a photo-electron multiplier (15) having a low-cut optical filter characteristic;
a LiF monocrystal window (7) having a KCl film applied thereon arranged in front of the photo-electron multiplier (15);
an adjustable high-cut optical filter (12) arranged in front of the photo-electron multiplier (15) and of which the high-cut optical filter characteristic is adjustable by controlling the temperature thereof; and
control means (8-11) for controlling the temperature of the high-cut optical filter to adjust the passband.

2. A passband-adjustable photo-detector according to claim 1, wherein the temperature is controllable from about liquid nitrogen temperature to a temperature of the order of 150°C.

3. A passband-adjustable photo-detector according to claim 1 or 2, wherein the adjustable high-cut optical filter (12) is a metal fluoride monocrystal window.

4. A passband-adjustable photo-detector according to claim 3, wherein the metal is an alkali or alkali earth metal.

5. A passband-adjustable photo-detector according to claim 4, wherein the metal is one of Sr, Mg, Li or Ca.

6. A passband-adjustable photo-detector according to claim 4, wherein the metal is Ca.

7. A passband-adjustable photo-detector according to any one of the preceding claims, wherein the photoelectric multiplier (15) has a KCl thin film deposited thereon as the means to provide the low-cut characteristic.

8. A passband-adjustable photo-detector according to any one of the preceding claims, wherein the high-cut optical filter (12) has a KCl film deposited thereon.

9. A passband-adjustable photo-detector according to any one of the preceding claims, further comprising control means (8-11) for controlling the temperature of said LiF monocrystal window (7) having a KCl film applied thereon.

10. A passband-adjustable photo-detector according to any one of the preceding claims, wherein an output of said photo-electron multiplier is connected with a pulse counter circuit through an amplifier, so as to measure any one of: the light absorption property, the window transmissibility and the sensitivity as a bandpass filter for inverse photoemission spectroscopy.

## Patentansprüche

1. Fotodetektor mit einstellbarem Durchlassband (6) für die Invers-Fotoemissions-Spektroskopie, wobei man ein Elektronenstrahl (2) von einer Elektronenkanone (1) auf eine Probe (3) auftreffen läßt und von diesem reflektiertes Licht (4,14) in einen Fotoelektronenvervielfacher (15) bündelt, um so die Fotodetektion zu bewirken, wobei der Fotodetektor (6) Folgendes umfasst:
einen Fotoelektronenvervielfacher (15) mit einer optischen Filtercharakteristik mit niedrigem Durchlassbereich;
ein LiF-Einkristall-Fenster (7) mit einem darauf aufgebrachten KCl-Film, angeordnet vor dem Fotoelektronenvervielfacher (15);
einen einstellbaren optischen Filter (12) mit hohem Durchlassbereich, welcher vor dem Fotoelektronenfilter (15) angeordnet ist und dessen optische Filtercharakteristik mit hohem Durchlassbereich durch Regulieren der Temperatur davon einstellbar ist; und
Regulierungseinrichtungen (8-11) zum Regulieren der Temperatur des optischen Filters mit hohem Durchlassbereich zur Einstellung des Durchlassbandes.

2. Fotodetektor mit einstellbarem Durchlassband nach Anspruch 1, wobei die Temperatur von etwa Flüssigstickstoff-Temperatur bis zu einer Temperatur im Größenbereich von 150°C regulierbar ist.

3. Fotodetektor mit einstellbarem Durchlassband nach Anspruch 1 oder 2, wobei der einstellbare optische Filter (12) mit hohem Durchlassbereich ein Metallfluorid-Einkristall-Fenster ist.

4. Fotodetektor mit einstellbarem Durchlassband nach Anspruch 3, wobei das Metall ein Alkali- oder Erdalkalimetall ist.

5. Fotodetektor mit einstellbarem Durchlassband nach Anspruch 4, wobei das Metall eines von Sr, Mg, Li oder Ca ist.

6. Fotodetektor mit einstellbarem Durchlassband nach Anspruch 4, wobei das Metall Ca ist.

7. Fotodetektor mit einstellbarem Durchlassband nach mindestens einem der vorhergehenden Ansprüche, wobei der fotoelektrische Vervielfacher (15) einen darauf abgeschiedenen KCl-Dünnfilm als Mittel zur Vorsehung der Charakteristik mit geringem Durchlassbereich aufweist.

8. Fotodetektor mit einstellbarem Durchlassband nach mindestens einem der vorhergehenden Ansprüche, wobei der optische Filter (12) mit hohem Durchlassbereich einen darauf abgeschiedenen KCl-Film aufweist.

9. Fotodetektor mit einstellbarem Durchlassband nach mindestens einem der vorhergehenden Ansprüche, weiterhin umfassend Regulierungseinrichtungen (8-11) zur Regulierung der Temperatur des LiF-Einkristall-Fensters (7) mit einem darauf aufgebrachten KCl-Film.

10. Fotodetektor mit einstellbarem Durchlassband nach mindestens einem der vorhergehenden Ansprüche, wobei der Output des Fotoelektronenvervielfachers mit einem Impulszählerkreislauf über einen Verstärker verbunden ist, um so irgendeines aus: dem Lichtabsorptionsvermögen, der Fenster-Durchlässigkeit und der Empfindlichkeit als Durchlassfilter für die Invers-Fotoemissions-Spektroskopie zu messen.

## Revendications

1. Photodétecteur à bande passante ajustable (6) pour une spectroscopie à photo-émission inverse, dans lequel un faisceau d'électrons (2) provenant d'un canon à électrons (1) est appliqué sur un échantillon (3) et une lumière (4, 14) réfléchie par celui-ci est convergée dans un multiplicateur de photo-électrons (15), de manière à effectuer une photodétection, ledit photodétecteur (6) comportant :
un multiplicateur de photo-électrons (15) ayant une caractéristique de filtre optique coupe-bas,
une fenêtre en monocristal de LiF (7) ayant un film de KCl appliqué dessus, agencée devant le multiplicateur de photo-électrons (15),
un filtre optique coupe-haut ajustable (12) agencé devant le multiplicateur de photo-électrons (15) et dont la caractéristique de filtre optique coupe-haut peut être ajustée en commandant la température de celui-ci, et
des moyens de commande (8-11) pour commander la température du filtre optique coupe-haut afin d'ajuster la bande passante.

2. Photodétecteur à bande passante ajustable selon la revendication 1, dans lequel la température peut être commandée d'environ la température d'azote liquide à une température de l'ordre de 150°C.

3. Photodétecteur à bande passante ajustable selon la revendication 1 ou 2, dans lequel le filtre optique coupe-haut ajustable (12) est une fenêtre en monocristal de fluorure métallique.

4. Photodétecteur à bande passante ajustable selon la revendication 3, dans lequel le métal est un métal alcalin ou alcalinoterreux.

5. Photodétecteur à bande passante ajustable selon la revendication 4, dans lequel le métal est l'un des métaux suivants Sr, Mg, Li ou Ca.

6. Photodétecteur à bande passante ajustable selon la revendication 4, dans lequel le métal est Ca.

7. Photodétecteur à bande passante ajustable selon l'une quelconque des revendications précédentes, dans lequel le multiplicateur photoélectrique (15) a un film mince de KCl déposé dessus en tant que moyens pour fournir la caractéristique coupe-bas.

8. Photodétecteur à bande passante ajustable selon l'une quelconque des revendications précédentes, dans lequel le filtre optique coupe-haut (12) a un film de KCl déposé dessus.

9. Photodétecteur à bande passante ajustable selon l'une quelconque des revendications précédentes, comportant de plus des moyens de commande (8-11) pour commander la température de ladite fenêtre en monocristal de LiF (7) ayant un film de KCl appliqué dessus.

10. Photodétecteur à bande passante ajustable selon l'une quelconque des revendications précédentes, dans lequel une sortie dudit multiplicateur de photo-électrons est connectée à un circuit compteur d'impulsions à travers un amplificateur, de manière à mesurer une caractéristique quelconque parmi : la propriété d'absorption de lumière, la transmissibilité et la sensibilité de la fenêtre en tant que filtre passe-bande pour une spectroscopie à photo-émission inverse.
